# EUROPEAN PATENT SPECIFICATION

(11) **EP 4 495 557 B1**
(45) Date of publication and mention of the grant of the patent: **27.05.2026**
(21) Application number: 24217005.8
(22) Date of filing: 21.01.2021
(51) Int. Cl.: G01B 11/00, G01H 9/00

(54) **COVER FOR AN OVERHEAD CABLE**
ABDECKUNG FÜR EINE OBERLEITUNG
COUVERCLE POUR CÂBLE AÉRIEN

(43) Date of publication of application: 22.01.2025
(62) Divisional of application: 21920990.5
(73) Proprietor: NTT, Inc., Tokyo 100-8116 (JP)
(72) Inventor: IIDA, Daisuke, Musashino-shi, Tokyo, 180-8585 (JP); KOSHIKIYA, Yusuke, Musashino-shi, Tokyo, 180-8585 (JP); HONDA, Nazuki, Musashino-shi, Tokyo, 180-8585 (JP)
(74) Representative: v. Bezold & Partner Patentanwälte - PartG mbB

(56) References cited:
- WO-A1-2020/044648
- WO-A1-2020/166330
- JP-A- 2017 219 369
- JP-A- 2020 052 030

## Description

### [Technical Field]

The present disclosure relates to a technique for specifying a route of an overhead cable including optical fibers by expressing the route with the length of optical fibers from a communication-intensive building.

### [Background Art]

A technique for specifying a position of a facility using an optical fiber vibration sensor is known (for example, see PTL 1 and PTL 2). For example, as illustrated in Fig. 1, when using an optical fiber vibration sensing device 20 from a communication-intensive building 10 of a communication optical fiber 25 and applying a hit 15 to a cover of a manhole 30 while measuring the vibration of the communication optical fiber 25, a hit vibration can be measured and the position on the optical fiber 25, in the longitudinal direction, from the communication-intensive building 10 (a distance from the communication-intensive building 10 to the position where vibration is applied) can be specified. By confirming the measurement result, it is possible to confirm that a communication optical fiber 35 exists in underground 6 at the position and to collate the manhole position with a fiber route map, without opening the manhole 30. [PTL 3] discloses a vibrating device for vibrating a diagonal member used in a cable-stayed bridge. The device comprises a frame member having a passage through which the diagonal member is passed; supporting means provided on both ends of the frame member, projecting towards the center of an opening continued to the passage, and abutting against the outer surface of the upper side of the diagonal member made to pass through the passage and supporting the frame member to the diagonal member; and vibration generation means located on the lower part of the diagonal member of the frame member into whose passage the diagonal member passes and mounted on the frame member.

### [Citation List]

### [Patent Literature]

[PTL 1] Japanese Patent Application Laid-open No. 2020-127094
[PTL 2] Japanese Patent Application Laid-open No. 2020-052030
[PTL 3] Japanese Patent Application Laid-open No. 2017-219369

### [Summary of Invention]

### [Technical Problem]

In order to solve the above problem, an object of the present invention is to provide a cover, which can be part of a facility position specification system, capable of specifying a route of an overhead cable without directly disturbing the overhead cable itself.

### [Solution to Problem]

On the other hand, the presence of an overhead cable can be confirmed visually, but it is not clear that an overhead cable which has been visually confirmed is a search object. In addition, as in PTL 1, directly applying a disturbance (hit or the like) to a cable may affect communication.

The invention discloses a cover according to claim 1.

### [Brief Description of Drawings]

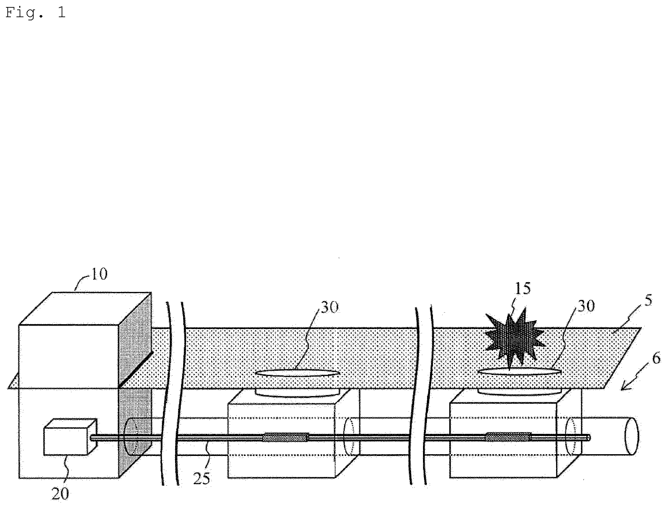

[Fig. 1] Fig. 1 is a diagram illustrating a facility position specification principle using an optical fiber vibration sensor.
[Fig. 2] Fig. 2 is a diagram illustrating a facility position specification system according to the present invention.
[Fig. 3] Fig. 3 is a diagram illustrating a cover included in the facility position specification system according to the present invention.
[Fig. 4] Fig. 4 is a diagram illustrating a facility position specifying method according to the present invention.
[Fig. 5] Fig. 5 is a diagram illustrating the facility position specifying method not encompassed by the wording of the claim.
[Fig. 6] Fig. 6 is a diagram illustrating the facility position specifying method according to the present invention.
[Fig. 7] Fig. 7 is a table for illustrating an operation method of the facility position specification system showing examples not encompassed by the wording of the claim as well as embodiments according to the present invention.
[Fig. 8] Fig. 8 is a diagram illustrating a scattered optical intensity distribution to be measured by an optical measuring instrument of the facility position specification system according to the present invention.
[Fig. 9] Fig. 9 is a diagram illustrating matching performed by the facility position specification system according to the present invention.
[Fig. 10] Fig. 10 is a diagram illustrating a facility position specifying method according to the present invention.
[Fig. 11] Fig. 11 is a diagram illustrating the facility position specification system not encompassed by the wording of the claim.

### [Description of Embodiments]

Embodiments of the present invention will be described with reference to accompanying drawings. The embodiments described below are examples of the present invention, and the present invention is not limited to the following embodiments. In the present specification and the drawings, the components having the same reference numerals indicate the same components.

### (Embodiment 1)

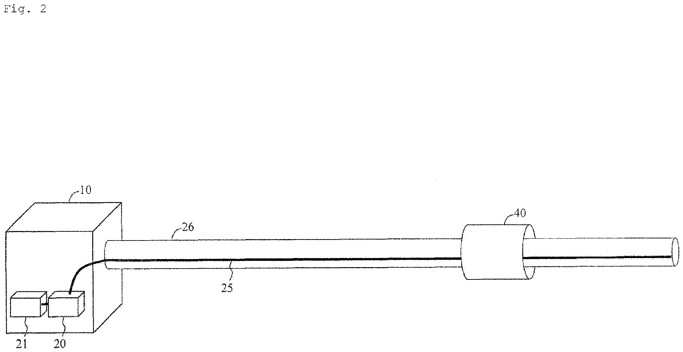

Fig. 2 is a diagram illustrating a facility position specification system comprising a cover according to the present invention. The facility position specification system is a facility position specification system for specifying a position of an overhead cable 26, the system including
an optical fiber 25 along the overhead cable 26,
a cylindrical cover 40 covering the overhead cable 26 at an arbitrary position on the overhead cable 26 in the longitudinal direction,
an optical measuring instrument 20 connected to an end of the optical fiber 25 and configured to acquire temporal change in scattered light from the optical fiber 25 when vibration is applied to the overhead cable 26 from the cover 40 as temporal change in a scattered optical intensity distribution of the optical fiber 25 in a longitudinal direction, and a signal processing unit 21 configured to specify a vibration position on the optical fiber 25 to which the vibration is applied based on the scattered optical intensity distribution, and specify an actual position of the overhead cable 26 to which the vibration is applied by associating the vibration position on the optical fiber 25 with a position of the overhead cable 26 on a map.

The overhead cable 26 is a cable stretched in the air by a pillar or the like. The overhead cable 26 is a metal wire or an optical fiber cable for power supply. The optical fiber 25 used in this system is laid along the overhead cable 26. In a case where the overhead cable 26 is an optical fiber cable, the optical fiber in the optical fiber cable can be used as the optical fiber 25.

The cover 40 is disposed so as to cover the overhead cable 26. The cover 40 may be attached when laying the overhead cable 26, or the cover 40 may be attached to the overhead cable 26 by a worker every inspection. The cover 40 has a function of transmitting vibration such as a given hit to the overhead cable 26. For this reason, the cover 40 is preferably made of a material having a high modulus of elasticity (a high Young's modulus) and a low density, for example, a metal, in order to efficiently transmit vibration to the cable.

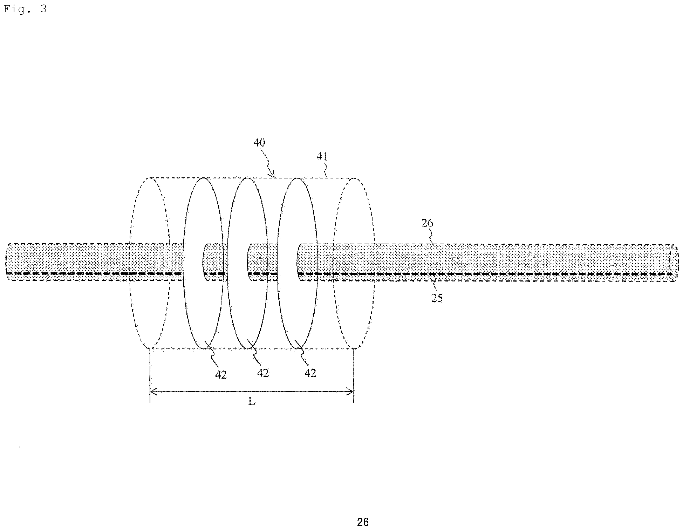

Fig. 3 is a diagram illustrating a structure of the cover 40.

The cover 40 includes
a cylinder 41 for covering the overhead cable 26 at an arbitrary position, and
a lamella 42 that is disposed on an inner wall of the cylinder 41, comes into contact with the overhead cable 26, and transmits vibration of the cylinder 41 to the overhead cable 26.

The cover 40 covers the overhead cable 26 with the cylinder 41. The cylinder 41 and the overhead cable 26 are not in direct contact with each other. The cover 40 has a lamella 42, and a space is generated between the cylinder 41 and the overhead cable 26 by the lamella 42 coming into contact with the overhead cable 26. The vibration from the cylinder 41 is transmitted to the overhead cable 26 through the lamellas 42. Thus, the vibration from the cylinder 41 can be efficiently transmitted to the overhead cable 26. In order to transmit vibration efficiently, the number of lamellas 42 and the length L of the cover 40 may be adjusted.

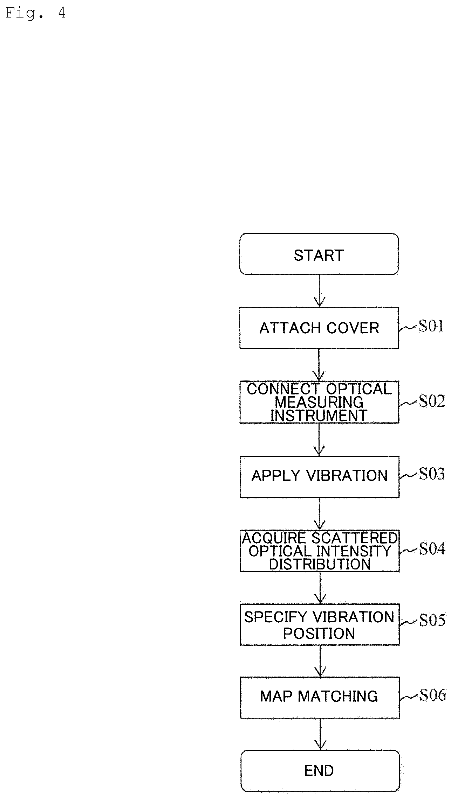

Fig. 4 is a flowchart illustrating the facility position specifying method. The present facility position specifying method includes
covering the overhead cable 26 with the cylindrical cover 40
at an arbitrary position on the overhead cable 26 in a longitudinal direction (step S01),
connecting an optical measuring instrument 20 to an end portion of the optical fiber 25 included in the overhead cable 26 (step S02),
applying vibration to the overhead cable 26 from the cover 40 (step S03),
acquiring a temporal change of scattered light from the optical fiber 25 when the vibration is applied as temporal change in a scattered optical intensity distribution of the optical fiber 25 in a longitudinal direction (step S04),
specifying a vibration position on the optical fiber 25 to which the vibration is applied based on the scattered optical intensity distribution (step S05), and
associating the vibration position on the optical fiber 25 with a position of the overhead cable 26 on a map 50 and specifying an actual position of the overhead cable 26 to which the vibration is applied (step S06).

In step S01, the cover 40 is attached to the overhead cable 26 whose position is desired to be ascertained. The number of covers 40 is arbitrary. The cover 40 may be attached when laying the overhead cable 26, or the cover 40 may be attached to the overhead cable 26 by a worker every inspection.

One end of the overhead cable 26 is drawn into a communication-intensive building 10. In step S02, the optical fiber 25 is taken out from the overhead cable 26 drawn into the communication-intensive building 10, and is connected to the optical measuring instrument 20 (the end of the optical fiber 25 connected to the optical measuring instrument 20 is defined as "one end"). The optical measuring instrument 20 is, for example, an optical time domain reflectometer (OTDR).

In step S03, test light is input from the optical measuring instrument 20 to one end of the optical fiber 25, and the vibration is applied to the cover 40 during an optical test in which back scattered light output from the one end of the optical fiber 25 is measured by the optical measuring instrument 20. Here, the vibration applying method will be described.

### (Method 1)

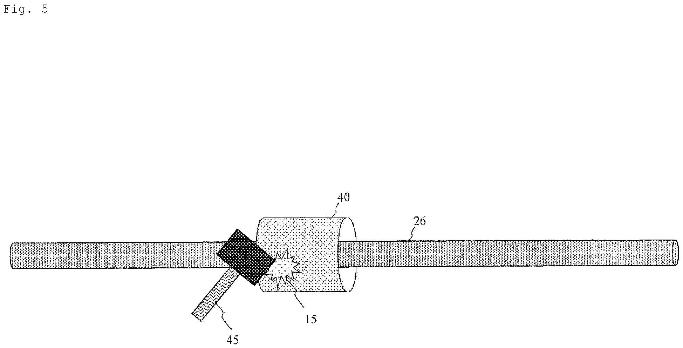

As illustrated in Fig. 5, an operator applies a hit 15 to the cover by a hammer or the like. For example, the operator may hit the cover by a long bar type hammer reaching from the ground. Further, the operator may move to the vicinity of the cover 40 by a bucket truck and hit the cover by a hammer.

### (Method 2)

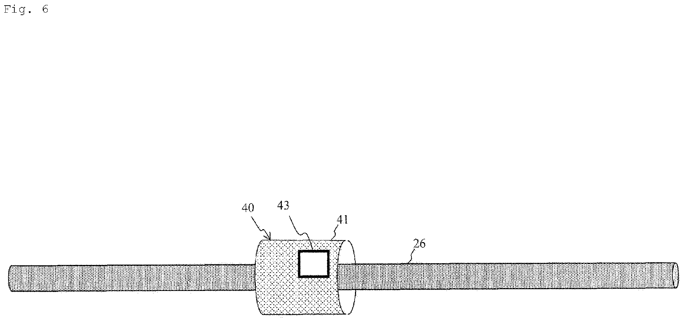

As illustrated in Fig. 6, the cover 40 includes a vibration mechanism 43 for generating vibration in the cylinder 41. The vibration mechanism 43 is disposed in the cylinder 41, and is composed of a piezoelectric moving by radio waves and a battery such as a solar cell for supplying electric power to the piezoelectric. A worker applies vibration remotely without riding on a bucket truck or the like.

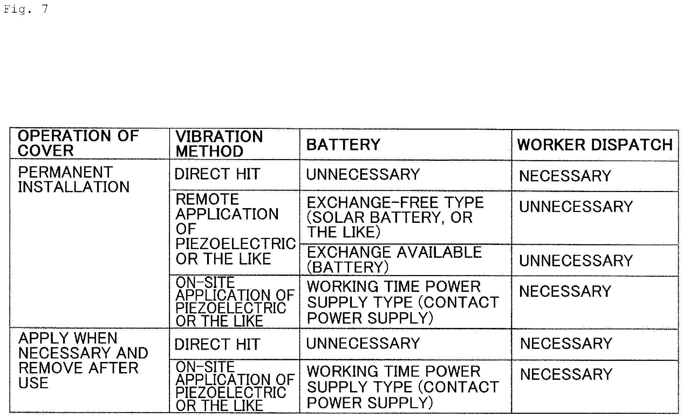

Fig. 7 is a table in which the work styles in the step S03 are summarized. As an operation method, there are cases where the cover 40 is always attached to the overhead cable 26 and where the cover 40 is always attached to the overhead cable 26 at the time of inspection. In a case not encompassed by the wording of the claims, if the vibration applying method is used for hitting the cover 40 with a hammer or the like, the cover 40 does not require a vibration mechanism, but it is necessary to dispatch the worker to the work site. According to the invention, the cover 40 is provided with the vibration mechanism 43, remotely controlled, and dispatch of a worker to the work site is not required. However, in a case not encompassed by the wording of the claim, where it is necessary to supply power tc the vibration mechanism 43 during work, it is necessary to dispatch a worker.

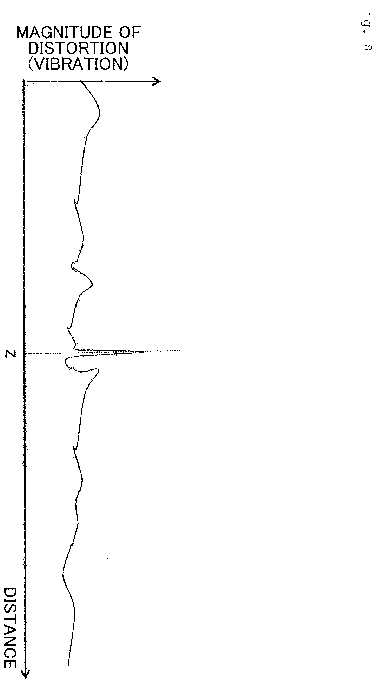

In steps S04 and S05, the optical measuring instrument 20 acquires an optical intensity distribution of back scattered light output from one end of an optical fiber 25. Fig. 8 shows an example of an optical intensity distribution obtained by the optical measuring instrument 20. The horizontal axis represents the distance from one end of the optical fiber 25. The vertical axis represents the light intensity of the back scattered light. It can be seen that there is a waveform peak at the position of the distance z and vibration was applied at this position.

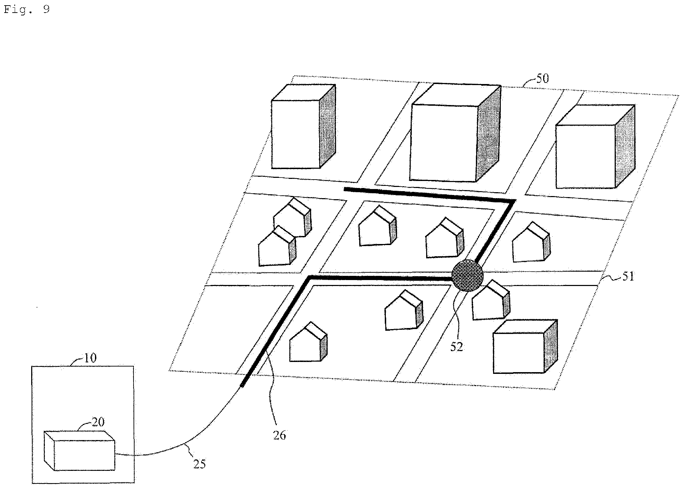

In step S06, a signal processing unit 21 matches a map 50 showing the layout of the overhead cable 26 with the optical intensity distribution of Fig. 8. Fig. 9 is a diagram illustrating matching work. On which route the overhead cable is laid when the overhead cable 26 is laid is recorded in the map 50.

As illustrated in Fig. 9, by collating the longitudinal distance of the optical fiber 25 with the length of the laid cable 26, the signal processing unit 21 can determine which place the peak position (hit position 52) of the optical intensity distribution illustrated in Fig. 8 corresponds to on the map 50.

### (Embodiment 2)

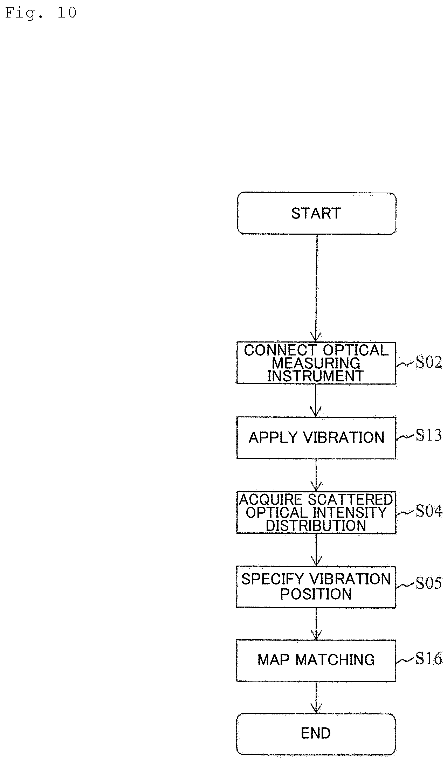

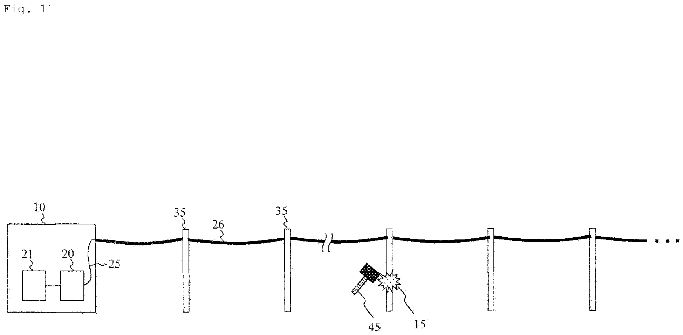

Fig. 10 is a flowchart for illustrating a facility position specifying method according to the present embodiment. Fig. 11 is a diagram for illustrating a facility position specification system not encompassed by the wording of the claim, to be inspected by the present facility position specifying method not encompassed by the wording of the claim. The present facility position specifying method is a method for specifying a facility position without attaching the cover 40 in comparison with the facility position specifying method of Embodiment 1. The present facility position specification method includes connecting the optical measuring instrument 20 to an end portion of the optical fiber 25 included in the overhead cable 26 (step S02),
applying vibration to any of pillars 35 supporting the overhead cable 26 (step S13),
acquiring a temporal change of scattered light from the optical fiber 25 when the vibration is applied as temporal change in a scattered optical intensity distribution of the optical fiber 25 in a longitudinal direction (step S04), specifying a vibration position on the optical fiber 25 to which the vibration is applied based on the scattered optical intensity distribution (step S05), and
associating the vibration position on the optical fiber 25 with a position of the overhead cable 26 on a map 50, and specifying an actual position of the pillar 35 to which the vibration is applied (step S16).

In the facility position specifying method according to the present embodiment, the pillar 35 supporting the overhead cable 26 is hit instead of hitting the cover. When the pillar 35 is hit by a hammer 45 or the like, the vibration is transmitted to the optical fiber 25 of the overhead cable 26, and the scattered optical intensity distribution as illustrated in Fig. 8 can be acquired by the optical measuring instrument 20. Therefore, as illustrated with reference to Fig. 9, by collating the scattered optical intensity distribution with the map 50 in which the laying of the overhead cable 26 is described, it is possible to specify the actual position of the pillar 35 (the position on the map).

The present facility position specifying method does not require the work of attaching the cover to the overhead cable 26 in comparison with the facility position specifying method described in Embodiment 1, and can simply ascertain the standard of the position of the overhead cable 26 and the position of the electric pillar.

### [Advantageous Effects of Invention]

Since the vibration is applied to the cover attached to the overhead cable and vibration is applied to the overhead cable without directly applying hit to the overhead cable, the scattered optical intensity distribution can be acquired without damaging the overhead cable.

The position and existence of the overhead cable can be determined even in a place where no electric pillar exists, and the overhead cable can be matched with the map.

The vibrator is applied to the cover, the vibration is applied to the overhead cable remotely.

### [Reference Signs List]

5: Ground
6: Underground
10: Communication-intensive building
15: Hit
20: Optical measuring instrument
21: Signal processing unit
25: Optical fiber
26: Overhead cable
30: Manhole
35: Pillar
40: Cover
41: Cylinder
42: Lamella
43: Vibration mechanism
50: Map
51: Road
52: Hit position

## Claims

1. A cover (40) for an overhead cable (26), the overhead cable (26) including an optical cable (25), the cover comprising:
a cylinder (41) for covering the overhead cable (26) including the optical cable (25) at an arbitrary position;
lamellas disposed on an inner wall of the cylinder (41), coming into contact with the overhead cable (26), and configured for transmitting vibration of the cylinder (41) to the overhead cable (26); and
a vibration mechanism (43) for generating vibration;
**characterized in that**
the vibration mechanism (43) includes a piezoelectric device, a battery for supplying electric power to the piezoelectric device, and means operable to control the vibration mechanism (43) remotely using radio waves.

## Patentansprüche

1. Eine Abdeckung (40) für ein oberirdisches Kabel (26), das oberirdische Kabel (26) umfasst ein optisches Kabel (25), die Abdeckung umfasst:
einen Zylinder (41) zum Abdecken des oberirdischen Kabels (26), das das optische Kabel (25) umfasst, an einer beliebigen Position;
Lamellen, die an einer Innenwand des Zylinders (41) angeordnet sind, in Kontakt mit dem oberirdischen Kabel (26) stehen und zum Übertragen von Schwingung des Zylinders (41) auf das oberirdische Kabel (26) konfiguriert sind; und
einen Schwingungsmechanismus (43) zum Erzeugen von Schwingung;
**dadurch gekennzeichnet, dass**
der Schwingungsmechanismus (43) ein piezoelektrisches Element, eine Batterie zum Bereitstellen elektrischer Energie für das piezoelektrische Element und Mittel, die betreibbar sind, den Schwingungsmechanismus (43) unter Verwendung von Funkwellen fernzusteuern, umfasst.

## Revendications

1. Enveloppe (40) pour câble aérien (26), le câble aérien (26) comprenant un câble optique (25), l'enveloppe comprenant :
un cylindre (41) destiné à recouvrir le câble aérien (26) comprenant le câble optique (25) à une position arbitraire ;
des lamelles disposées sur une paroi interne du cylindre (41), venant en contact avec le câble aérien (26), et configurées pour transmettre les vibrations du cylindre (41) au câble aérien (26) ; et
un mécanisme vibratoire (43) pour générer des vibrations ;
**caractérisée en ce que**
le mécanisme vibratoire (43) comprend un dispositif piézo-électrique, une batterie destinée à alimenter en énergie électrique le dispositif piézo-électrique, et des moyens permettant de commander le mécanisme vibratoire (43) à distance au moyen d'ondes radio.
